# EUROPEAN PATENT APPLICATION

(11) **EP 4 800 981 A1**
(43) Date of publication of application: **02.09.2026**
(21) Application number: 25160918.6
(22) Date of filing: 28.02.2025
(51) Int. Cl.: H04L 9/40, H04L 67/12, H04W 12/08

(54) **PROVIDING CONNECTIVITY BETWEEN A PERSONAL ELECTRONIC DEVICE AND A NETWORKED OUTPUT DEVICE IN AN AIRCRAFT**

(71) Applicant: AIRBUS Operations GmbH, 21129 Hamburg (DE)
(72) Inventor: HEINISCH, Matthias, 21129 Hamburg (DE); Krüger, Leo, 21129 Hamburg (DE)
(74) Representative: Airbus Germany

(57) **Abstract**

Proposed is a method for providing connectivity between a personal electronic device (110), PED, and a networked output device in an aircraft. The method comprises providing an encapsulated subnetwork within a wireless network of the aircraft. The subnetwork is dedicated to the networked output device (120). The method further comprises providing, via the networked output device (120), configuration information configured to provide access to the subnetwork for the PED (110). The subnetwork is configured to provide connectivity between the networked output device (120) and the PED (110) when the subnetwork is accessed by the PED (110) using the configuration information.

## Description

### TECHNICAL FIELD OF THE INVENTION

The present invention relates to connectivity of portable and/or personal electronic devices in an aircraft. In particular, the present invention relates to a method for providing connectivity between a portable and/or personal electronic device (PED) and a networked output device in an aircraft. Further, the present invention relates to a communication apparatus for an aircraft and a computer program.

### TECHNICAL BACKGROUND

In an aircraft, passengers may bring their own portable or personal electronic devices (PEDs), for example, to view or listen to media content during the flight. In the context of PEDs, it is known from life practice that such PED may be coupled to an output device, such as a screen, a loudspeaker, or the like, to stream and/or output media content from the PED via the respective output device. Pairing, i.e. operationally coupling, a PED with such an output device may be facilitated in different ways, such as Bluetooth^{®} coupling, Wi-Fi discovery-based screen detection, streaming technologies including screen mirroring etc., wired connections, or the like.

In an aircraft, however, there may be a large number of PEDs and a large number of output devices installed in the aircraft, presenting technical challenges when aiming on connecting a respective PED with an output device.

### SUMMARY OF THE INVENTION

An object of the invention is to facilitate connectivity between a portable and/or personal electronic device (PED) and a networked output device in an aircraft. This object is solved by the subject-matter of the appended independent claims. Further embodiments are defined in the appended dependent claims.

A first aspect relates to a method for providing connectivity between a personal electronic device (PED) and at least one networked output device in an aircraft. The method comprises providing an encapsulated subnetwork within a wireless network of the aircraft, the subnetwork being dedicated to the at least one networked output device. The method further comprises providing, via the networked output device, configuration information configured to provide access to the subnetwork for the PED. The subnetwork is configured to provide connectivity between the at least one networked output device and the PED when the subnetwork is accessed by the PED using the configuration information.

In this way the method and apparatus disclosed herein facilitates connecting and/or coupling of a PED to at least one networked output device installed in an aircraft. For example, the method and apparatus facilitate media streaming, screen-casting, etc. from a PED to such networked output device, such as an in-seat screen, in the context of an in-flight entertainment in an aircraft. The method and apparatus are each configured to establish an association of one PED and one or more networked output devices while using a connectivity mean shared with a plurality of PEDs and a plurality of networked output devices. The proposed method and apparatus may enable a secured virtual channel between a PED and a networked output device. By that, disclosure of streamed content and control from unauthorized PEDs or persons, respectively, may be prevented. The method and apparatus may allow to use of standard discovery methods and/or of well accepted streaming technologies even in scenarios where a large number of PEDs as well as networked output devices use a shared communication mean, e.g. a WLAN network. Dedicating the subnetwork to a networked output device may prevent error-prone selection of the correct networked output device compared to the case where a plurality of output devices is located and, that is shown, in the same common overall network of the aircraft. In other words, if the PED is connected to the subnetwork, it may be advantageous to present only this subnetwork as available, so that the subnetwork can be selected from a manageable list via the PED in order to connect to the desired networked output device.

As used herein, the encapsulated subnetwork may be understood as a network that does not establish its own physical connection but uses an existing communication network, i.e. the wireless network, as a transport medium. For example, the subnetwork may be isolated, separated, or the like from the existing communication network. It may have a different network identifier, e.g. Service Set Identifier (SSID), than the existing communication network. The subnetwork may be a hidden network. Further, by way of example, the subnetwork may be a private network. It may also be access-restricted. The subnetwork may be provided in different ways. For example, the subnetwork may be any one of a virtual network, being based on e.g. Virtual Local Area Network (VLAN), Software-defined Networking (SDN), a virtual private network (VPN), or any other suitable network technology that allows to establish an encapsulated subnetwork. To enable further communication and services, the subnetwork may only affect device discovery and streaming. Communication means between different PEDs and also external communication links is not affected.

As used herein, the wireless network may be provided within the aircraft, if applicable, also as one of several networks in the aircraft. The wireless network of the aircraft may be understood as a computer network that links two or more devices within the aircraft to form a local area network (LAN). Components that are to connect to the wireless network may comprise a network interface (controller) and/or other suitable means configured to establish and/or use a network connection. They may transmit and receive radio frequencies for wireless-enabled devices to communicate with. The wireless network may be implemented by one or more suitable network devices.

Further, as used herein, the networked output device may be understood as any output device that can be used to output content, such as media content or the like. The networked output device may be connectable or connected to at least one network of the aircraft, i.e. the wireless network of the aircraft. The connection may be wired or wireless. Further, information other than media content may be output via the networked output device. In general, the subnetwork may be used to connect any transmitter with the networked output device. For example, the methods and apparatus disclosed herein may be used for a connection from a climate truck to a temperature sensor in a corresponding zone of the cabin. In this case, the temperature sensor and the climate truck may be in the same subnetwork. It is understood that the principle of providing a dedicated subnetwork for connectivity between two devices may be applied to further use cases, wherein this may also include a sensor and other aircraft equipment.

As used herein, the personal electronic device (PED) may be understood as any electronic device or computer device carried by a passenger, flight crew member, maintenance personnel, ground crew member, etc. It is not actually part of the aircraft's equipment. Accordingly, the PED changes regularly, e.g. each flight and/or with changing the respective passenger, person, etc. It may be a portable device. Examples of the PED comprise smartphones, tablets, laptops, wearable devices, such as smartwatches, etc. Correspondingly, the PED comprises at least one interface configured to be connected to the network of the aircraft. For example, the at least one interface of the passenger-owned device may be at least one of a USB interface, Firewire interface, WLAN, Bluetooth^{®}, or a comparable future interface, wherein this is not limited herein. When connected to the subnetwork, the PED may be configured to stream data, e.g. media content, via the networked output device.

Further, as used herein, the configuration information may be understood as information enabling a connection to the subnetwork. For example, it may comprise at least one of a network identifier, or generally a network name, login information, credentials, or the like. Providing the configuration information at or near to the location of the networked output device, e.g. by a code displayed, by near-field communication, or the like, may serve to prove that the PED is in the vicinity of the networked output device.

In an embodiment, upon a user command, at least one further networked output device may be added to the subnetwork so as to provide the PED with access to at least two heterogeneous or homogeneous networked output devices. In other words, one PED may be associated with multiple, e.g. at least two, networked output devices. This may allow the PED to stream to multiple homogenous networked output devices, e.g. in-seat screens, and/or to multiple heterogeneous networked output devices, e.g. an in-seat screen, networked loudspeaker, ambient light, reding light, or the like. For example, one passenger may stream to its own screen and may further stream to a screen of a companion, which may be in another seat, etc. That is, in at least some embodiments, there may be a one-to-one correspondence between the PED and the networked output device, and in at least some embodiments, there may be a one-to-n-correspondence between one PED and multiple networked output devices. Further, by way of example, two networked output devices may be in one subnetwork. Also, the PED may be in two subnetworks. Furthermore, an additional subnetwork may encompass multiple subnetworks.

According to an embodiment, access of further PEDs to the subnetwork may be restricted when or as long the subnetwork is already accessed by the PED. This may provide privacy for the PED and/or may ensure that the networked output device presents only the output the comes from the associated PED.

In an embodiment, an association between the networked output device and the PED is resettable by a reset command. In other words, from a network side, there may be means to reset previous associations between one or more PEDs and the networked output device(s). This may be done when new passengers board, or also on request when passengers are re-seated or as a security measure when unexpected content is shown, e.g. a malicious passenger could have joined the respective subnetwork in an unattended situation, etc., wherein the use cases are not limited herein.

According to an embodiment, the subnetwork may be configured as at least one of a virtual network and a virtual private network, VPN. As mentioned above, any suitable network technology allows for establishing a private network may be used for this purpose.

In an embodiment, the networked output device may be at least one of a screen, particularly an in-seat screen, a loudspeaker, an ambient light, and reading light. As mentioned above, one PED may connect to only one networked output device or may connect to multiple networked output devices. The screen, loudspeaker, etc. may be used to output data provided, e.g. streamed, by the PED.

According to an embodiment, the configuration information may be provided by displaying a corresponding code to be entered or to be photographed on a screen of the networked output device. The code may be, for example, an alphanumeric code, a QR code, or the like. By typing in or scanning the code, the PED may be enabled to connect to the subnetwork. For example, in case of a VPN, the configuration information may comprise tunnel information, credentials, or the like, configured to establish the connection.

In an embodiment, wherein the configuration information is provided via a near-field communication interface coupled to the networked output device. Merely by way of example, near-field communication (NFC) may be used, wherein this disclosure is not limited to a specific communication protocol. As for the above-mentioned code displayed, the near-field communication may serve to prove that the PED is in the vicinity of the networked output device.

According to an embodiment, within the wireless network of the aircraft, a plurality of encapsulated subnetworks may be provided for a plurality of networked output devices. Each encapsulated subnetwork may be dedicated to a respective networked output device.

According to a second aspect, there is provided a communication apparatus for an aircraft. The communication apparatus comprises at least one network device. The apparatus, and especially the at least one network device, is configured to provide a wireless network in the aircraft. Further, the apparatus, and especially the at least one network device, is configured to provide an encapsulated subnetwork within a wireless network of the aircraft, the subnetwork being dedicated to a networked output device of the aircraft. The apparatus, and especially the at least one network device, is configured to provide, via the networked output device, configuration information configured to provide access to the subnetwork for a personal electronic device (PED). The subnetwork is configured to provide connectivity between the networked output device and the PED when the subnetwork is accessed by the PED using the configuration information.

The communication apparatus may be used to implement the method of the first aspect. Accordingly, for further embodiments, examples, etc., reference is made to the first aspect.

For example, the communication apparatus and/or the at least one network device may comprise components, such as network interface, or the like, configured to provide a suitable network architecture and/or infrastructure.

In an embodiment, the at least one network device may at least form part of a centralized server. For example, the server may comprise or may run a server software configured to create, establish, or the like the subnetwork for each networked output device. It may also provide means to assign at least one new PED to this subnetwork. The server and/or server software may be configured to manage the configuration information as disclosed herein. The server application may comprise means to reset previous associations between PEDs and networked output devices. This may be done when new passengers board, or also on request when passengers are re-seated or as a security measure when unexpected content is shown, e.g. a malicious passenger could have joined the respective subnetwork in an unattended situation.

According to an embodiment, the at least one network device, and/or its software, may be implemented in a distributed manner, being at least in part arranged at the networked output device. For example, it may be implemented on the side of the networked output device directly in the firmware of the device or via a so-called dongle interfacing with the output device via standard interfaces, e.g., HDMI. The networked output devices and/or dongles may be the manager of their associated subnetwork(s). It may comprise the necessary configuration information and/or a reset on request. The distributed architecture may have a particularly good maintenance and/or simpler configuration than a central solution.

A third aspect relates to an aircraft. The aircraft comprises a communication apparatus according to the second aspect. Further, the aircraft may comprise means to implement the method according to the first aspect. The aircraft may further comprise at least one networked output device or a plurality of networked output devices.

According to a further aspect, there is provided a computer program comprising instructions which, when the program is executed by a network device, cause the network device to carry out the method according to the first aspect. Also, the computer program may be implemented in the communication apparatus.

According to a further aspect, there is provided a computer-readable medium comprising instructions which, when executed by a network device, cause the network device to carry out the method according to the first aspect.

A further aspect relates to a communication system for an aircraft. The communication system may comprise the communication apparatus according to the second aspect. The communication system may further comprise at least one networked output device. The communication apparatus and the at least one networked output device may be operationally coupled with each other. The communication system may be configured to provide the wireless network in the aircraft and to provide the at least one subnetwork dedicated to the at least one networked output device. For further embodiments, reference is made to the above aspects.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF SUMMARY OF THE DRAWINGS

The present invention is explained in more detail below with reference to the embodiments shown in the schematic figures:
- Fig. 1: illustrates an exemplary approach for providing connectivity between a personal electronic device (PED) and a networked output device in an aircraft, according to an embodiment.
- Fig. 2: illustrates an exemplary approach for providing connectivity between a personal electronic device (PED) and a networked output device in an aircraft, according to an embodiment
- Fig. 3: illustrates an exemplary communication system and/or communication apparatus according to an embodiment.
- Fig. 4: illustrates an aircraft comprising a communication apparatus, according to an embodiment.
- Fig. 5: illustrates in a flow chart a method for providing connectivity between a personal electronic device (PED) and a networked output device in an aircraft, according to an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

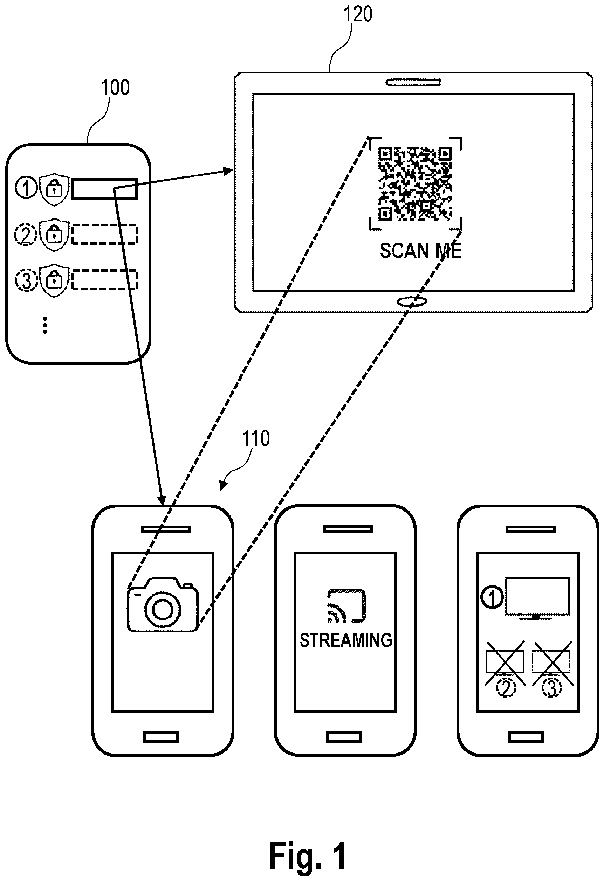

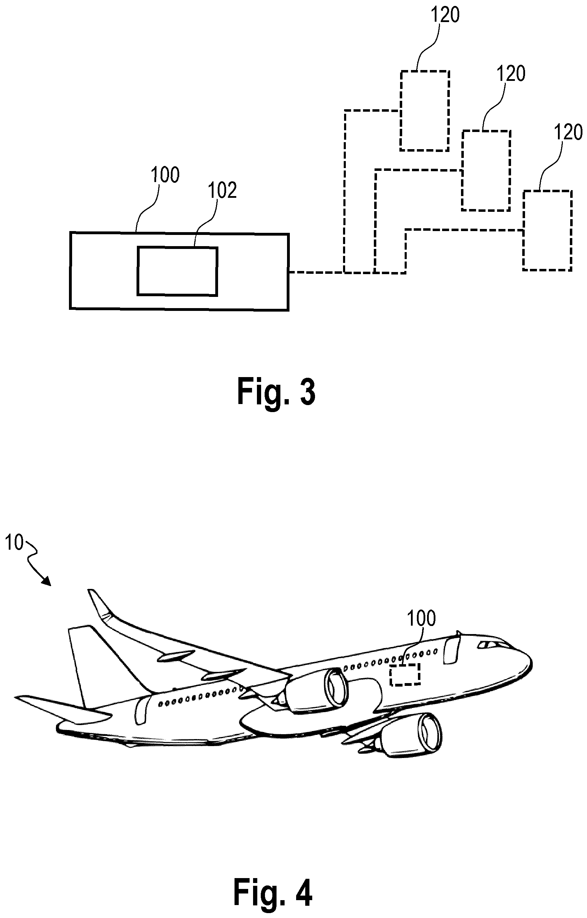

Fig. 1 illustrates an exemplary approach, using a communication apparatus 100, for providing connectivity between a personal electronic device (PED) 110 and at least one networked output device 120 in an aircraft 10 (see e.g. Fig. 4). The communication apparatus 100 is provided in the aircraft 10.

For example, the PED 110 may be a smartphone, tablet, laptop, wearable device, such as smartwatches, etc. Further, by way of example, the networked output device 120 may be at least one of a screen, particularly an in-seat screen, and a loudspeaker installed in the aircraft 10. The screen, loudspeaker, etc. may be used to output data provided, e.g. streamed, by the PED 110. It is noted that although Fig. 1 illustrates only one exemplary networked output device 120, the aircraft 10 may comprise a plurality of networked output devices 120. The networked output devices 120 may be operationally coupled to a communication network, e.g. a wireless network, via a wired or a wireless connection.

The communication apparatus 100 is configured to provide a communication network (not explicitly shown), especially a wireless network, within the aircraft 10. Based on the communication network, the communication apparatus 100 is configured to provide at least one encapsulated subnetwork within the wireless network of the aircraft 10. The at least one encapsulated subnetwork may be understood as being based on the communication network, i.e. wireless network, in terms of using its physical and/or radio frequency connection etc. for data transmission. In other words, the at least one encapsulated subnetwork may be established on or within the communication network of the aircraft 10. According to Fig. 1, there is a plurality of subnetworks provided, wherein, for sake of better illustration, only three exemplary subnetworks are referred to, namely subnetwork 1, subnetwork 2, and subnetwork 3. In the example of Fig. 1, subnetwork 1 is intended to be connected to by the PED 110, which intention is illustrated by using solid lines, while subnetworks 2 and 3 are illustrated by using dashed lines. In Fig. 1, a secure shield is illustrated for each of the subnetwork 1, subnetwork 2, and subnetwork 3 to indicate that each of these subnetworks is encapsulated, e.g. private. Also, these subnetworks 1, 2 and 3 may be access-restricted requiring corresponding configuration information for each of subnetwork 1, subnetwork 2, and subnetwork 3.

The subnetwork 1 is dedicated to the networked output device 120, as illustrated by an arrow pointing to the networked output device 120. Likewise, each of the other subnetworks 2 and 3 may be dedicated to another networked output device (not shown). In this way, only the subnetwork 1 may be presented to one PED 110. For example, the subnetwork 1, 2, 3 may be configured as at least one of a virtual network and a virtual private network, VPN.

Regarding the PED 110 illustrated in Fig. 1, it is noted that there is actually only one PED 110 that is intended to connect to the subnetwork 1 and use the subnetwork 1 to connect to the networked output device 120, although the PED 110 is shown three times for a better illustration of the approach. This threefold representation of the PED 110 is chosen to better illustrate the different stages of the approach.

As exemplary illustrated in Fig. 1, the networked output device 120 is used to provide configuration information configured to provide access to the subnetwork, here subnetwork 1, for the PED 110. For example, the configuration information may be provided by displaying a corresponding code to be entered or to be photographed on a screen of the networked output device 120. The code may be, for example, an alphanumeric code, a QR code, or the like. By typing in or scanning the code, e.g. by using a camera of the PED 110, the PED 110 may be enabled to connect to the subnetwork, here the subnetwork 1. For example, in case of a VPN, the configuration information may comprise tunnel information, credentials, or the like, configured to establish the connection.

Accordingly, as illustrated in the first, left-hand side representation of the PED 110 in Fig. 1, the PED 110 may scan the code indicating the configuration information of the subnetwork 1 by using its camera. This may load or may otherwise make available the configuration information for connecting, e.g. log-in, to the subnetwork 1. Then, a user of the PED 110 may select a streaming function or the like, as illustrated in the middle presentation of the PED 110 in Fig. 1. Then, the PED 110 may connect to the networked output device 120, as illustrated on the right-hand side representation of the PED 110 in Fig. 1, wherein the crossed-out networked output devices, designated as 2 and 3, are only intended to illustrate that, via subnetwork 1, at least essentially only one connection is or may be established to the associated dedicated networked output device 120. In other words, the respective subnetwork is configured to provide connectivity between the networked output device 120 and the PED 110 when the subnetwork is accessed by the PED using the configuration information.

It is noted that, in at least some embodiments, instead of the code displayed, the configuration information is provided via a near-field communication interface coupled to the networked output device. Merely by way of example, near-field communication (NFC) may be used, wherein this disclosure is not limited to a specific communication protocol.

In the example of Fig. 1, the communication apparatus 100 may at least form part of a centralized server. For example, the server may comprise or may run a server software configured to create, establish, or the like the subnetwork for each networked output device 120. It may also provide means to assign at least one new PED 110 to this subnetwork. The server and/or server software may be configured to manage the configuration information as disclosed herein. The server application may comprise means to reset previous associations between PEDs and networked output devices. This may be done when new passengers board, or also on request when passengers are re-seated or as a security measure when unexpected content is shown, e.g. a malicious passenger could have joined the respective subnetwork in an unattended situation.

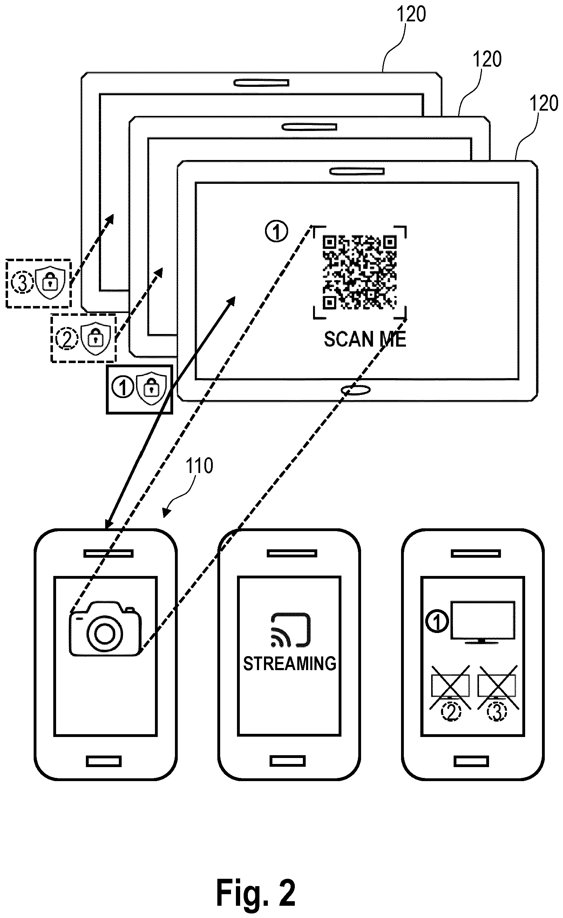

Fig. 2 illustrates another exemplary approach, using at least one communication apparatus 100, for providing connectivity between the personal electronic device (PED) 110 and the networked output device 120 in an aircraft, i.e. in the aircraft 10 (see e.g. Fig. 4). The at least one communication apparatus 100 may be provided in the aircraft 10.

As in Fig. 1, according to Fig. 2, there is a plurality of subnetworks provided, wherein, for sake of better illustration, only three exemplary subnetworks are referred to, namely subnetwork 1, subnetwork 2, and subnetwork 3. In the example of Fig. 2, subnetwork 1 is intended to be connected to by the PED 110, which intention is illustrated by using solid lines, while subnetworks 2 and 3 are illustrated by using dashed lines. In Fig. 2, a secure shield is illustrated for each of the subnetwork 1, subnetwork 2, and subnetwork 3 to indicate that each of these subnetworks is encapsulated, e.g. private. Also, these subnetworks 1, 2 and 3 may be access-restricted requiring corresponding configuration information for each of subnetwork 1, subnetwork 2, and subnetwork 3.

Deviating from the example illustrated in Fig. 1, according to which the at least one communication apparatus 100 is or comprises a centralized server and/or server software, this example according to Fig. 2 is implemented in a distributed manner.

Accordingly, as illustrated in Fig. 2, the at least one communication apparatus 100, e.g. at least one network device, and/or its software, may be implemented in a distributed manner. For example, one or more distributed means may be at least in part arranged at the respective networked output device 120. In Fig. 2, this arrangement is illustrated and indicated by the secure shields numbered with 1, 2 and 3 being arranged at the respective networked output devices 120. By way of example, it may be implemented on the side of the networked output device 120 directly in the firmware of the networked output device 120 or via a so-called dongle interfacing with the output device via standard interfaces, e.g., HDMI. The networked output devices 120 and/ or dongles may be the manager of their associated subnetwork(s) 1, 2 and 3. It may comprise the necessary configuration information. Further, it may comprise a reset function for resetting the connection to the networked output device 120 on request.

Apart from the arrangement in the distributed manner, the approach in Fig. 2 is similar to that in Fig. 1, so that reference is made to the description above. Details in this regard are not repeated again.

Fig. 3 illustrates an exemplary communication apparatus 100 for an aircraft, i.e. aircraft 10. The communication apparatus 100 may be configured to implement any one of the above approaches according to Fig. 1 and Fig. 2 for providing connectivity between the personal electronic device (PED) 110 (see Fig. 1 and Fig. 2) and the networked output device 120 in an aircraft, i.e. in the aircraft 10 (see e.g. Fig. 4). As indicated in Fig. 3 by dashed lines, the communication apparatus 100 may be operationally connected to at least one networked output device 120, as described above. The at least one communication apparatus 100 may be provided in the aircraft 10.

Referring to Fig. 3, the communication apparatus 100 comprises at least one network device 102. The communication apparatus 100 and/or the at least one network device 102 is configured to provide the above-mentioned communication network, e.g. wireless network in the aircraft 10. Further, the communication apparatus 100 and/or the at least one network device 102 is configured to provide the above-mentioned encapsulated subnetwork, e.g. subnetworks 1, 2 and 3 (see Fig. 1 and/or Fig. 2) within the wireless network of the aircraft 10. The subnetwork is dedicated to the at least one networked output device 120 of the aircraft 10. Further, the communication apparatus 100 and/or the at least one network device 102 is configured to provide, via the at least one networked output device 120, configuration information configured to provide access to the subnetwork for the PED. wherein the subnetwork is configured to provide connectivity between the at least one networked output device 120 and the PED 110 when the subnetwork is accessed by the PED using the configuration information.

As explained above with reference to Fig. 1, the communication apparatus 100 and/or the at least one network device 102 may form at least part of a centralized server.

Alternatively, as explained above with reference to Fig. 2, the communication apparatus 100 and/or the at least one network device 102 may be implemented in a distributed manner, being at least in part arranged at the at least one networked output device 120.

Fig. 4 illustrates the above-mentioned aircraft 10. The aircraft 10 comprises the above-mentioned communication apparatus 100. Further, the aircraft 10 may comprise means to implement the methods and/or approaches disclosed herein. The aircraft 10 may further comprise at least one networked output device 120 or a plurality of networked output devices 120.

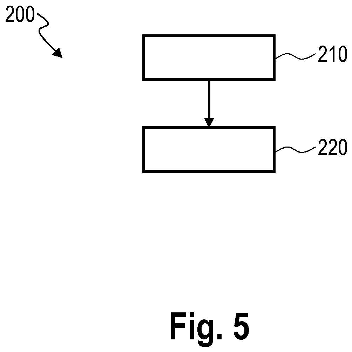

Fig. 5 illustrates in a flow chart a method 200 for providing connectivity between a personal electronic device (PED), e.g. PED 110, and a networked output device, e.g. networked output device 120, in an aircraft, e.g. aircraft 10.

The method 200 comprises providing 210 an encapsulated subnetwork, e.g. any one of subnetworks 1, 2 and 3, within a wireless network of the aircraft. The subnetwork is dedicated to the networked output device. Further, the method 200 comprises providing 220, via the networked output device, configuration information configured to provide access to the subnetwork for the PED. The subnetwork is configured to provide connectivity between the networked output device and the PED when the subnetwork is accessed by the PED using the configuration information.

Based on the embodiments described above, the methods, approaches and apparatuses disclosed herein may be modified in several respects.

In at least some embodiments, an association between the networked output device and the PED may be resettable by a reset command. In other words, from a network side, there may be means to reset previous associations between one or more PEDs and the networked output device(s). This may be done when new passengers board, or also on request when passengers are re-seated or as a security measure when unexpected content is shown, e.g. a malicious passenger could have joined the respective subnetwork in an unattended situation, etc., wherein the use cases are not limited herein.

Further, in at least some embodiments, the subnetwork may be configured as at least one of a virtual network and a virtual private network, VPN. Any suitable network technology allows for establishing a private network may be used for this purpose.

As mentioned above, the configuration information may be provided by displaying a corresponding code to be entered or to be photographed on a screen of the networked output device. The code may be, for example, an alphanumeric code, a QR code, or the like. By typing in or scanning the code, the PED may be enabled to connect to the subnetwork. For example, in case of a VPN, the configuration information may comprise tunnel information, credentials, or the like, configured to establish the connection. Alternatively, the configuration information may be provided via a near-field communication interface coupled to the networked output device. Merely by way of example, near-field communication (NFC) may be used, wherein this disclosure is not limited to a specific communication protocol. As for the above-mentioned code displayed, the near-field communication may serve to prove that the PED is in the vicinity of the networked output device.

### LIST OF REFERENCE SIGNS

- 10: aircraft
- 100: communication apparatus
- 102: network device
- 110: personal electronic device (PED)
- 120: networked output device
- 200: method
- 210: method step
- 220: method step

## Claims

1. A method (200) for providing connectivity between a personal electronic device (110), PED, and a networked output device in an aircraft (10), the method comprising:
providing (210) an encapsulated subnetwork within a wireless network of the aircraft (10), the subnetwork being dedicated to the networked output device (120);
providing (220), via the networked output device, configuration information configured to provide access to the subnetwork for the PED;
wherein the subnetwork is configured to provide connectivity between the networked output device (120) and the PED (110) when the subnetwork is accessed by the PED (110) using the configuration information.

2. The method of claim 1, wherein the connectivity between the networked output device (120) and the PED (110) is for streaming media content from the PED (110) to the networked output device (120).

3. The method of claim 1 or 2, wherein, upon a user command, at least one further networked output device is added to the subnetwork so as to provide the PED (110) with access to at least two heterogeneous or homogeneous networked output devices (120).

4. The method of any one of the preceding claims, wherein access of further PEDs to the subnetwork is restricted when or as long the subnetwork is already accessed by the PED (110).

5. The method of any one of the preceding claims, wherein an association between the networked output device (120) and the PED (110) is resettable by a reset command.

6. The method of any one of the preceding claims, wherein the subnetwork is configured as at least one of a virtual network and a virtual private network, VPN.

7. The method of any one of the preceding claims, wherein the networked output device (120) is at least one of a screen, particularly an in-seat screen, a loudspeaker, an ambient light, and a reading light.

8. The method of any one of the preceding claims, wherein the configuration information is provided by displaying a corresponding code to be entered or to be photographed on a screen of or coupled to the networked output device (120).

9. The method of any one of claims 1 to 7, wherein the configuration information is provided via a near-field communication interface of or coupled to the networked output device (120).

10. The method of any one of the preceding claims, wherein, within the wireless network of the aircraft (10), a plurality of encapsulated subnetworks is provided for a plurality of networked output devices (120), and each encapsulated subnetwork is dedicated to a respective networked output device (120).

11. A communication apparatus (100) for an aircraft (10), comprising:
at least one network device (102) configured to:
provide a wireless network in the aircraft (10);
provide an encapsulated subnetwork within the wireless network of the aircraft, the subnetwork being dedicated to a networked output device (120) of the aircraft (10);
provide, via the networked output device (120), configuration information configured to provide access to the subnetwork for a personal electronic device (110), PED;
wherein the subnetwork is configured to provide connectivity between the networked output device (120) and the PED (110) when the subnetwork is accessed by the PED (110) using the configuration information.

12. The communication apparatus of claim 11, wherein the at least one network device (102) at least forms part of a centralized server.

13. The communication apparatus of claim 11, wherein the at least one network device (102) is implemented in a distributed manner, being at least in part arranged at the networked output device (120).

14. An aircraft (10), comprising a communication apparatus (100) according to any one of claims 11 to 13.

15. A computer program comprising instructions which, when the program is executed by a network device, cause the network device to carry out the method of any one of claims 1 to 10.
